Europäisches Patentamt

European Patent Office

Office européen des brevets

(19)

(11) Veröffentlichungsnummer : **0 114 227 B1**

# (12) EUROPÄISCHE PATENTSCHRIFT

(45) Veröffentlichungstag der Patentschrift :
12.11.86

(21) Anmeldenummer : 83111399.8

(22) Anmeldetag : 15.11.83

(51) Int. Cl.⁴ : **F 16 J 15/34**, F 01 P 5/10

(54) **Verfahren zum Einstellen der axialen Federkraft der Einbaueinheit einer Gleitringdichtung.**

(30) Priorität : 24.12.82 DE 3247980

(43) Veröffentlichungstag der Anmeldung :
01.08.84 Patentblatt 84/31

(45) Bekanntmachung des Hinweises auf die Patenterteilung : 12.11.86 Patentblatt 86/46

(84) Benannte Vertragsstaaten :
AT DE FR GB IT

(56) Entgegenhaltungen :
US-A- 2 797 940

(73) Patentinhaber : **GOETZE AG**
**Bürgermeister-Schmidt-Strasse 17**
**D-5093 Burscheid 1 (DE)**

(72) Erfinder : **Treiber, Hartmut, Dr.**
**Feldhauserweg 12**
**D-4018 Langenfeld (DE)**
Erfinder : **Deuring, Hans**
**Im Eulenflug 29**
**D-5093 Burscheid (DE)**

Jouve, 18, rue St-Denis, 75001 Paris, France

**Beschreibung**

Die Erfindung betrifft ein Verfahren zum Einstellen der axialen Federkraft einer mit einem Laufrad verbundenen Gleitringdichtung, indem das Laufrad, die Gleitringdichtung, der Gegenring sowie ein alle Teile axial zusammenhaltender Körper zu einer Einbaueinheit verbunden werden.

Durch die DE-C 2 729 928 ist eine Zentrifugalpumpe mit integrierter Einbaueinheit gemäß Oberbegriff der Ansprüche 1 und 5 bekannt. Die Einbaueinheit setzt sich im wesentlichen aus einem mit einer Nabe verbundenen Laufrad, einem elastisch an der Nabe aufgehängten Gegenring, einer Gleitringdichtung sowie einem mit der Nabe verbundenen, axial hinter die Gleitringdichtung greifenden Verbindungskörper zusammen, wobei die Gleitringdichtung im wesentlichen aus einem Gehäuse, einer Membran, einem Gleitring sowie einer die axiale Anpreßkraft erzeugenden Feder besteht.

Weiterhin ist durch die DE-C 2 623 583 ein Verfahren zur Montage von Gleitringdichtungen mit einem Laufrad bekannt. Zunächst werden Laufrad und Gleitringdichtung mit integriertem Gegenring zu einer Einbaueinheit dadurch verbunden, daß der Gegenring auf das Laufrad aufgepreßt und dann die Gleitringdichtung mit dem Laufrad verbunden wird.

In beiden vorab angesprochenen Dichtungsbzw. Einbaueinheiten kommt bevorzugt eine, eine gewisse axiale Baulänge aufweisende, spiralförmig gewundene Feder zum Einsatz, die sich in der Regel sowohl am Gehäuse als auch am Gleitring bzw. der damit verbundenen Membran abstütz und durch axiales Zusammendrücken der Gleitringdichtung im Einbauzustand die für die Abdichtung erforderliche axiale Anpreßkraft des Gleitringes an den Gegenring erzeugt.

Als nachteilig bei deisen Federn ist anzusehen, daß sich, bedingt durch Fertigungstoleranzen und wenn auch geringfügigen Werkstoffunterschieden, unterschiedliche Federkonstanten einstellen, so daß bei in Serie hergestellten Dichtungseinheiten, wie sie etwa vorab beschrieben worden sind, sich teilweise erhebliche Toleranzunterschiede ergeben. Wesentliche Faktoren, die der Gesamt-Federkonstante bei üblichen Gleitringdichtungen mit Gehäusen zugrundeliegen, sind :

Die Federkonstante der Metallfeder, die Federkonstante der Membran bzw. eines zusätzlichen elastomeren Körpers, die axiale Gesamtlänge der Dichtung sowie die axiale Länge der Dichtung im Einbauzustand (also das Einbaumaß). Aus diesen Faktoren wird die Gesamt-Federkonstante ermittelt. Daraus ist ganz klar ersichtlich, daß hier eine Reihe von Faktoren hinsichtlich Toleranzen zu berücksichtigen sind, und daß daher ein großer Toleranzbereich vorhanden sein muß, um überhaupt in Serien fertigen zu können. Alle diese Faktoren können Einfluß auf die Lebensdauer der Dichtung haben. Weiterhin nachteilig ist zu bemerken, daß es keine Möglichkeit gibt, die vorab beschriebenen Federn auf eine bestimmte Federkonstante einzustellen, die dann im Betriebszustand im wesentlichen über die gesamte Lebensdauer gleich bleibt. Selbst wenn derartige Dichtungseinheiten mittels eines speziellen Werkzeuges, wie es zum Beispiel in der DE-C 2 729 928 beschrieben ist, möglichst ohne größere Veränderung der Federkraft bzw. -konstante in das Pumpengehäuse eingesetzt werden, so werden die Federn in relativ kurzer Zeit im Betriebszustand ihre Federeigenschaften verändern. Dies wirkt sich dann wiederum, bedingt durch eine verringerte Anpreßkraft des Gleitringes an den Gegenring, nachteilig auf die Abdichtgüte der Einbaueinheit aus, die dann unter Umständen schon nach relativ kurzer Laufzeit ausgetauscht werden muß.

Der Erfindung liegt daher die Aufgabe zugrunde, sowohl ein Verfahren zur Herstellung und Prüfung von Dichtungseinheiten als auch eine danach hergestellte bzw. geprüfte, einsetzbare Dichtungseinheit zu konzipieren, die die vorab angeführten Nachteile im wesentlichen vermeidet.

Diese Aufgabe wird erfindungsgemäß dadurch gelöst, daß die Einbaueinheit nach deren Montage auf ihr Einbaumaß axial zusammengedrückt, die Federkraft gemessen und anschließend die für die jeweilige Einbausituation, zum Beispiel in eine Pumpe, erforderliche axiale Federkraft eingestellt wird. Durch diese vor dem Einbau der Einbaueinheit in das Pumpengehäuse durchgeführte Maßnahme wird sichergestellt, daß für jeden Anwendungsfall unter Ausschaltung von Federkonstanten-Toleranzen die einmal eingestellte Federkonstante über eine wesentlich längere Laufzeit erhalten bleibt und auch durch den Einbau in das Pumpengehäuse nicht verändert wird. Ein wichtiger Faktor für die Einstellung der Federaxialkraft ist in der Werkstoffpaarung von Gleit- und Gegenring zu sehen. Diese Paaung von zum Beispiel Keramik/Hartbandkohle hat einen so geringen Verschleiß, daß eine Verschleißreserve < 0,5 mm zum Beispiel für den Einsatz in einer Kühlwasserpumpe ausreicht. Die Verringerung der Verschleißreserve führt unter Umständen zu einer steilen Federkennung, die durch die Möglichkeit der Einstellung der Federaxialkraft nicht nur ohne negative Auswirkung bleibt, sondern den Stand der Technik erheblich verbessert. Üblicherweise weisen Gleitringdichtungen ein winkelförmiges Gehäuse auf. Innerhalb dieses Gehäuses sind die schon angesprochenen Teile dann teilweise oder ganz angeordnet. Zur Einstellung der axialen Federkraft wird weiterhin vorgeschlagen, daß aus dem Gehäuse der Gleitringdichtung vor dem Zusammenbau der Einbaueinheit federnde Zungen herausgebogen werden. Diese werden dann mittels eines Handwerkzeuges oder automatisch durch eine entsprechende Vorrichtung nach dem Zusammenbau der Einbaueinheit und nach dem Meßvorgang verformt. Auf diese Weise erfolgt eine Feineinstellung der bereits durch den Biege-vorgang dem Sollwert angenäherten Federkon-stante. Die Verformung der federnden Zungen erfolgt zweckmäßigerweise vor der Prüfung der Einbaueinheit auf Gasdichtheit, da hier nochmals die eingestellte axiale Federkraft überprüft und gegebenenfalls nochmals korrigiert werden kann.

Eine gemäß dem erfindungsgemäßen Verfahren hergestellte und geprüfte Einbaueinheit ist dadurch gekennzeichnet, daß aus dem Gehäuse der Gleitringdichtung federnde Zungen herausgebogen sind, die mittel- oder unmittelbar am Gleitring anliegen. Liegen die federnden Zungen unmittelbar am Gleitring an, so kann auf weitere Federkörper verzichtet werden. Durch diese Maßnahme kann eine aus möglichst wenigen Teilen bestehende Dichtungseinheit hergestellt werden.

Einem weiteren Gedanken der Erfindung gemäß sind die federnden Zungen aus dem Ra-dialschenkel des winkelförmigen Gehäuses her-ausgeformt. Sie aus dem Axialschenkel herauszuformen, ist zwar generell auch möglich, hier könnte sich jedoch die Einstellung der axialen Federkraft durch Verformung der federnden Zungen etwas schwieriger gestalten. Vorzugsweise erstrecken sich die federnden Zungen radial von außen im wesentlichen konisch in Richtung des Gleitringes, wo sie bevorzugt im Bereich seiner inneren Umfangsfläche zur Anlage kommen.

Zwecks einfacher Verformung des Radialschenkels beziehungsweise der federnden Zungen sind im Bereich der freien Enden sich vom Gleitring weg erstreckende Abbiegungen mit einem etwa gerundeten Querschnittsprofil angeformt. Durch auf eine, mehrere oder sogar alle Abbiegungen ausgeübte Zug- bzw. Druckkräfte kann die Federkonstante und die damit zusammenhängende Federkraft je nach Anwendungsfall individuell eingestellt werden.

Eine weitere vorteilhafte Ausbildung der Erfindung ist darin zu sehen, daß der Radialschenkel des Gehäuses der Gleitringdichtung beziehungsweise die daraus herausgeformten federnden Zungen der Kontur des Federdichtringes folgend ausgebildet sind. Durch diese Maßnahme wird der Federdichtring gestützt und so gegen axiales Verrutschen gesichert.

Sollte diese Maßnahme bei speziellen Abdichtungsproblemen nicht ausreichen, so besteht die Möglichkeit, zusätzlich eine sich radial zwischen dem Gleitring und dem Radialschenkel bezie-hungsweise den federnden Zungen erstreckende, mit in Umfangsrichtung gesehen axial verlau-fendem Wellprofil versehene Mäanderfeder vorzu-sehen.

Für die Herstellung des Gehäuses einer herkömmlichen Gleitringdichtung werden je nach Anwendungsfall Metallgehäuse mit oder ohne Korrosionsschutz eingesetzt. Hier besteht die Gefahr, daß beim Herausbiegen der federnden Zungen eventuell die Elastizitätsgrenze überschritten wird und die Zungen somit nicht mehr gemäß der Erfindung verformt werden können. Aus diesem Grund wird vorgeschlagen, das Gehäuse der Gleitringdichtung aus Federstahl herzustellen.

Wie schon angesprochen, sollte die neu konzipierte Dichtungseinheit zur Erhöhung der Wirtschaftlichkeit aus möglichst wenigen Teilen bestehen. Zu diesem Zweck ist es sinnvoll, die Laufradnabe axial so weit zu verlängern, daß der Radialschenkel des Gehäuses der Gleitringdichtung beziehungsweise die federnden Zungen im nicht eingebauten Zustand der Einbaueinheit nach deren Verformung an der mit dem Laufrad verbundenen Nabe anliegen. Durch die Verwendung von Federstahl und die einmal eingestellte Axialkomponente der federnden Zungen wirkt sich diese, selbst bei Anlage derselben an der Nabe, nicht negativ auf die Wirkungsweise im eingebauten Zustand aus.

Die Erfindung ist in der Zeichnung dargestellt und wird im folgenden näher beschrieben. Es zeigen

Figuren 1 bis 3 Unterschiedliche Ausbildungen von Einbaueinheiten

Figur 4 Gegenüberstellung der Federkonstanten bei einer herkömmlichen und einer neuen Dichtung in einem Diagramm.

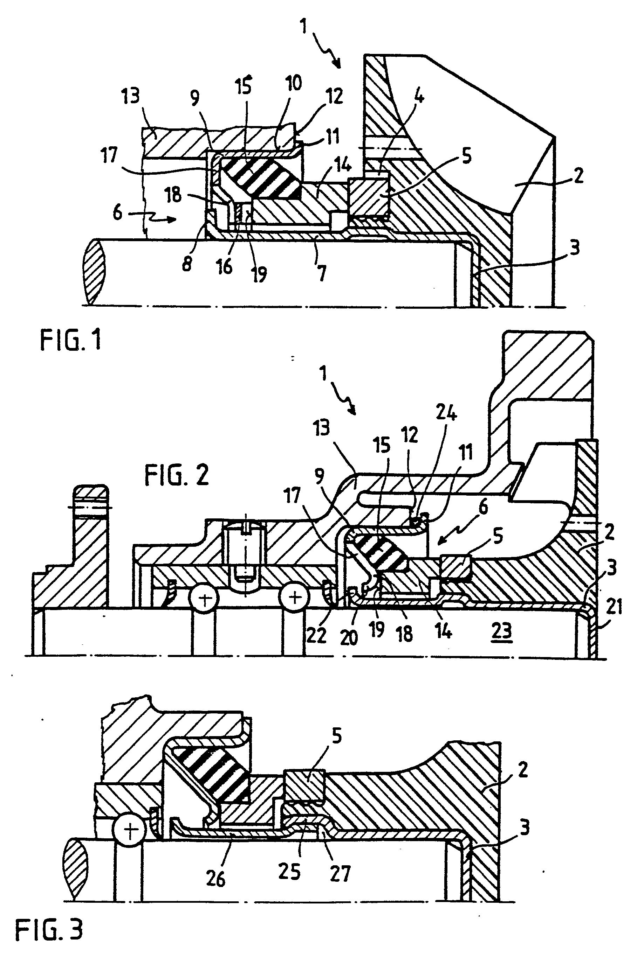

Die in Figur 1 dargestellte Einbaueinheit 1 besteht aus einem Laufrad 2, einer damit verbundenen, vorzugsweise aus Blech gezogenen Nabe 3, einem in einer Ausnehmung 4 des Laufrades 2 gelagerten Gegenring 5 sowie einer Gleitringdichtung 6. Die Nabe 3 ist axial bis hinter die Gleitringdichtung verlängert 7, wo sie dann radial abgebogen 8 ist. Die Gleitringdichtung 6 selber besteht aus einem winkelförmigen Gehäuse 9, welches im Bereich seiner äußeren Umfangsfläche 10 mit einem Anschlag 11 versehen ist, der im Einbauzustand an der korrespondierenden Stirnfläche 12 eines nur angedeuteten Pumpengehäuses 13 zur Anlage kommt. Innerhalb des Gehäuses 9 sind ein Gleitring 14, ein Federdichtring 15 und eine in axialer Richtung gewellte Mäanderfeder 16 angeordnet. Letztere stütz sich axial sowohl an federnden, aus dem Radialschenkel 17 des Gehäuses 9 herausgebogenen Zungen 18 und der dem Gegenring 5 abgewandten Stirnfläche 19 des Gleitringes 14 ab. Die federnden Zungen 18 sind etwa mittig des Radialschenkels 17 zunächst etwa axial und dann wieder radial gebogen. Durch Ausübung von Zug-bzw. Druckkräften auf die federnden Zungen 18 beziehungsweise den Radialschenkel 17 mittels eines nicht weiter dargestellten Werkzeuges kann die Federkonstante der Mäanderfeder 16 beeinflusst werden, so daß die axiale Federkraft jeder Dichtungseinheit individuell eingestellt werden kann.

Figur 2 zeigt eine ähnliche Einbaueinheit 1, wie sie in Figur 1 abgebildet ist. Unterschiede sind in dem Fehlen der Mäanderfeder 16 zu sehen. Zur Erzeugung der axialen Federkraft dienen hier die aus dem Radialschenkel 17 des Gehäuses 9 herausgebogenen federnden Zungen 18, die unmittelbar an der Stirnfläche 19 des Gleitringes 14 zur Anlage kommen und dabei gleichzeitig den vom Schlauch abgestochenen Federdichtring 15 abstützen. Um nun auch hier die Axialkraft einstellen zu können, sind die federnden Zungen 18 im Bereich ihrer freien Enden entgegengesetzt zum Gleitring 14, ein etwa gerundetes Querschnittsprofil bildend, abgebogen 20. Die Dichtungseinheit 1 ist in das Gehäuse 13 einer für Kraftfahrzeuge verwendbaren Kühlwasserpumpe eingebaut. Das napfförmig ausgebildete eine Ende 21 der die Gleitringdichtung 6 am anderen Ende 22 umgreifenden Nabe 3 ist auf ein korrespondierendes Wellenende 23 aufgedrückt. Der Anschlag 11 des Gehäuses 9 ist, um die eingestellte Federkraft der Zungen 18 im Einbauzustand nicht zu verändern, mit axialem Abstand zur korrespondierenden Stirnfläche 12 des Pumpengehäuses 13 angeordnet. Zur statischen Abdichtung kann an dieser Stelle ein O-Ring 24 vorgesehen beziehungsweise die äußere Umfangsfläche 10 des Gehäuses mit Dichtlack versehen werden.

Figur 3 ist etwa analog zu Figur 2 zu sehen mit dem Unterschied, daß hier die aus einem gebogenen Blechteil bestehende Nabe 3 des Laufrades 2 unterhalb des Gegenringes 5, diesen radial geringfügig spannend, endet. Die radiale Spannung wird durch eine in Richtung des Gegenringes 5 sich erstreckende Sicke 25 erzeugt. Ein zusätzlicher, ebenfalls aus Blech bestehender Verbindungskörper 26 erstreckt sich axial bis in die durch die Sicke 25 gebildete Ausnehmung 27.

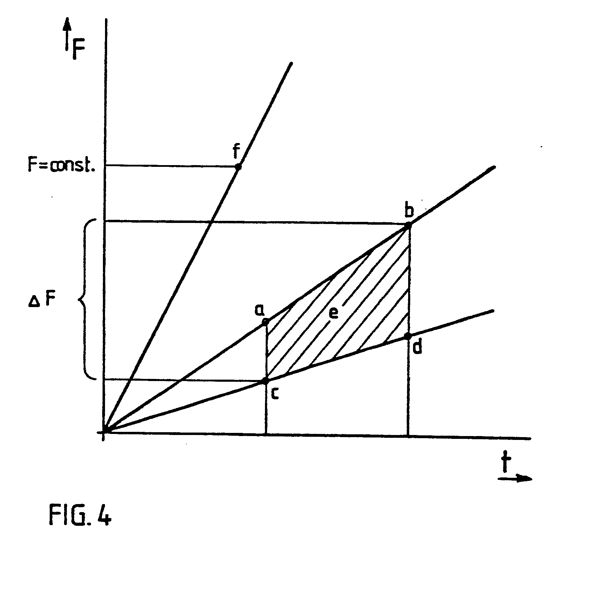

In Figur 4 ist in Form eines Diagrammes schematisch der Verlauf unterschiedlicher Einflüsse auf die Federkonstange bei Dichtungen dargestellt. Wie schon in der Beschreibungseinleitung angesprochen, haben eine Reihe von Faktoren Einfluß auf die Gesamt-Federkonstante, nämlich die Federkonstante der Metallfeder, die Federkonstante des Federdichtringes, die axiale Länge der Dichtung sowie das Einbaumaß. Ohne die einzelnen Faktoren jetzt näher zu definieren, sind diese in dem Diagramm mit den Ziffern a, b, c und d bezeichnet. Das schraffierte Feld e spiegelt das Toleranzfeld wieder, in welches in Serie gefertigte Dichtungen vor dem Einbau in das Pumpengehäuse hineinfallen. Daraus resultiert natürlich auch eine für jede Dichtung unterschiedliche Kraft bzw. Federkonstante. Der Toleranzbereich ist in dem Diagramm durch die Ziffer $\Delta$ F angegeben. Dieses aus vielen Faktoren gebildete $\Delta$ F hat nun im Betriebszustand einen maßgeblichen Anteil an der Lebensdauer der gesamten Einbaueinheit.

Um diesen erheblichen Nachteil zu beseitigen, mußten die Einflüsse der unterschiedlichen Faktoren auf die Gesamt-Federkonstante untersucht und so weit möglich eliminiert werden. Dies ist durch die geschilderten Maßnahmen geschehen. Wie insbesondere in den Figuren 2 und 3 dargestellt, ist der Federdichtring 15 axial gestützt, so daß er nicht mehr unter axialer Druckbelastung verformt werden kann. Die Federkonstante bzw. die axiale Federkraft wird anschließend durch die federnden Zungen 18 eingestellt, so daß eine für alle Dichtungen gleiche Federkraft (F = const.) eingestellt werden kann, die auch durch den Montagevorgang nicht verändert wird. Auch eine höhere Axialkraft wird durch entsprechende Werkstoffpaarungen von Gleit- und Gegenring bei entsprechend geringem Verschleiß wieder komprimiert.

## Patentansprüche

1. Verfahren zum Einstellen der axialen Federkraft einer mit einem Laufrad (2) verbundenen Gleitringdichtung (6), indem das Laufrad (2), die Gleitringdichtung (6), der Gegenring (5) sowie ein alle Teile axial zusammenhaltender Körper zu einer Einbaueinheit (1) verbunden werden, dadurch gekennzeichnet, daß die Einbaueinheit (1) auf ihr Einbaumaß axial zusammengedrückt, die Federkraft gemessen und anschließend die für die jeweilige Einbausituation erforderliche axiale Federkraft eingestellt wird.

2. Verfahren nach Anspruch 1, dadurch gekennzeichnet, daß vor der Montage der Einbaueinheit aus dem Gehäuse (9) der Gleitringdichtung federnde Zungen (18) herausgebogen werden.

3. Verfahren nach den Ansprüchen 1 und 2, dadurch gekennzeichnet, daß die federnden Zungen (18) nach dem Messen der Axialkraft verformt werden.

4. Verfahren nach den Ansprüchen 1 bis 3, dadurch gekennzeichnet, daß die Verformung der federnden Zungen (18) vor der Prüfung der Einbaueinheit (1) auf Gasdichtheit durchgeführt wird.

5. Gemäß dem Verfahren hergestellte und geprüfte Einbaueinheit (1), insbesondere für Flüssigkeitspumpen, bestehend aus einem Laufrad (2), einem mit diesem zusammenwirkenden Gegenring (5), einer Gleitringdichtung (6) sowie einem alle Teile axial zusammenhaltenden Verbindungskörper, wobei die Gleitringdichtung (6) ein winkelförmiges Gehäuse (9), einen Gleitring (14) und einen aus Elastomermaterial bestehenden Federdichtring (15) aufweist nach den Ansprüchen 1 bis 4, dadurch gekennzeichnet, daß aus dem Gehäuse (9) federnde Zungen (18) herausgebogen sind, die mittel- oder unmittelbar am Gleitring (14) anliegen und mittels derer die für die jeweilige Einbausituation erforderliche axiale Federkraft der Dichtungseinheit einstellbar ist.

6. Einbaueinheit nach Anspruch 5, dadurch gekennzeichnet, daß die federnden Zungen (18) aus dem Radialschenkel (17) des Gehäuses (9) herausgeformt sind.

7. Einbaueinheit nach den Ansprüchen 5 und 6, dadurch gekennzeichnet, daß die federnden Zungen (18) sich radial von außen im wesentlichen konisch in Richtung des Gleitringes (14) erstrecken und im Bereich seiner inneren Umfangsfläche zur Anlage kommen.

8. Einbaueinheit nach den Ansprüchen 5 bis 7, gekennzeichnet durch am freien Ende der federnden Zungen (18) angeformte, sich vom Gleitring (14) weg erstreckende Abbiegungen (20).

9. Einbaueinheit nach den Ansprüchen 5 bis 8, dadurch gekennzeichnet, daß die Abbiegungen (20) ein gerundetes Querschnittsprofil aufweisen.

10. Einbaueinheit nach den Ansprüchen 5 bis 9, dadurch gekennzeichnet, daß der Radialschenkel (17) bzw. die daraus herausgeformten federnden Zungen (18), der Kontur des Federdichtringes (15) folgend, ausgebildet sind.

11. Einbaueinheit nach den Ansprüchen 5 bis 10, gekennzeichnet durch eine sich axial zwischen dem Gleitring (14) und dem Radialschenkel (17) bzw. den federnden Zungen (18) erstreckende, etwa mäanderförmige Federscheibe (16).

12. Einbaueinheit nach den Ansprüchen 5 bis 11, dadurch gekennzeichnet, daß das Gehäuse (9) der Gleitringdichtung (6) aus Federstahl besteht.

13. Einbaueinheit nach den Ansprüchen 5 bis 12, dadurch gekennzeichnet, daß die federnden Zungen (18) im nicht eingebauten Zustand der Einbaueinheit (1) am abgebogenen Radialschenkel (8) einer als Verbindungskörper (7, 26) zwischen Gleitringdichtung (6) und Laufrad (2) dienenden, mit dem Laufrad (2) verbundenen Nabe (3) anliegen.

## Claims

1. Method of setting the axial elastic force of a mechanical face seal (6) connected to an impeller (2) by connecting together into one assembly (1) the impeller (2), the mechanical face seal (6), the mating ring (5) and an element uniting all the parts axially, characterized by the fact that the assembly (1) is compressed axially to installation dimension, the elastic force is measured and the axial elastic force required for the particular installation situation is then set.

2. Method according to Claim 1, characterized by the fact that prior to installation of the assembly resilient lugs (18) are bent from the housing (9) of the mechanical face seal.

3. Method according to Claims 1 and 2, characterized by the fact that the resilient lugs (18) are deformed after measurement of the axial force.

4. Method according to Claims 1 to 3, characterized by the fact that the deformation of the resilient lugs (18) is carried out prior to the assembly (1) beeing tested for gas tightness.

5. Assembly (1) manufactured and tested according to the method, for use especially in liquid pumps, comprising an impeller (2), a mating ring (5) interacting therewith, a mechanical face seal (6) and a connecting element uniting all the parts axially, wherein the mechanical face seal (6) has an angular housing (9), a seal ring (14) and an elastomeric trapezoidal section ring (15) according to Claims 1 to 4, characterized by the fact that resilient lugs (18) are bent from the housing (9) and rest directly or indirectly against the seal ring (14) and by means of which the axial elastic force of the seal unit required for the particular installation situation can be set.

6. Assembly according to Claim 5, characterized by the fact that the resilient lugs (18) are formed out of the radial flank (17) of the housing (9).

7. Assembly according to Claims 5 and 6, characterized by the fact that the resilient lugs (18) extend essentially in a taper radially from the outside towards the seal ring (14) and come to rest in the region of the inside circumferential surface thereof.

8. Assembly according to Claims 5 to 7, characterized by bends (20) formed at the free of the resilient lugs (18) and extending away from the seal ring (14).

9. Assembly according to Claims 5 to 8, characterized by the fact that the bends (20) possess a rounded cross-sectional profile.

10. Assembly according to Claims 5 to 9, characterized by the fact that the radial flank (17) or the resilient lugs (18) formed therefrom are designed such that they follow the contour of the trapezoidal section ring (15).

11. Assembly according to Claims 5 to 10, characterized by the roughly meander-shaped spring washer (16) extending axially between the seal ring (14) and the radial flank (17) or the resilient lugs (18).

12. Assembly according to Claims 5 to 11, characterized by the fact that the housing (9) of the mechanical face seal (6) is made of spring steel.

13. Assembly according to Claims 5 to 12, characterized by the fact that when the assembly (1) is not installed the resilient lugs (18) rest against the bent radial flank (8) of a hub (3) connected to the impeller (2) and acting as a connecting element (7, 26) between the mechanical face seal (6) and impeller (2).

## Revendications

1. Procédé pour le réglage de la force élastique axiale d'un joint à bague frottante (6) lié à une roue mobile (2), la roue mobile (2), le joint à bague frottante (6), la contre-bague (5) ainsi qu'un corps maintenant ensemble toutes les pièces axialement étant réunis en une unité de montage (1), caractérisé en ce que l'unité de montage (1) est comprimé axialement sur son support de montage, en ce que la force élastique est mesurée et en ce que, pour finir, la force élastique axiale nécessaire à chaque situation de montage est réglée.

2. Procédé selon la revendication 1, caractérisé en ce qu'avant le montage de l'unité de montage des languettes élastiques (18) sont courbées à partir du carter (9) du joint à bague frottante.

3. Procédé selon les revendications 1 et 2, caractérisé en ce que les languettes élastiques (18) sont conformées d'après les mesures de la force axiale.

4. Procédé selon les revendications 1 à 3, caractérisé en ce que la mise en forme des languettes élastiques (18) a lieu avant la vérification de l'unité de montage (1) à l'étanchéité au

gaz.

5. Unité de montage (1), en particulier pour pompe à liquide, fabriquée et vérifiée selon le procédé, comportant une roue mobile (2), une contre-bague (5) coopérant avec cette dernière, un joint à bague frottante (6), de même qu'un corps de liaison maintenant ensemble axialement toutes les pièces, le joint à bague frottante (6) comprenant un carter (9) de forme anguleuse, une bague frottante (14) et une bague d'étanchéité élastique (15) faite d'un matériau élastomère selon les revendications 1 à 4, caractérisée en ce que des languettes élastiques (18) sont courbées à partir du carter (9), lesquelles sont directement ou indirectement adjacentes à la bague frottante (14) et au moyen desquelles la force élastique axiale de l'unité d'étanchéité nécessaire à chaque situation de montage est réglable.

6. Unité de montage selon la revendication 5, caractérisée en ce que les languettes élastiques (18) sont formées à partir du côté radial (17) du carter (9).

7. Unité de montage selon les revendications 5 et 6, caractérisée en ce que les languettes élastiques (18) s'étendent radialement vers l'extérieur, sensiblement selon un cône, dans la direction de la bague frottante (14) et viennent en contiguïté de sa surface périphérique intérieure.

8. Unité de montage selon les revendications 5 à 7, caractérisée par des parties courbes (20) s'étendant à partir de la bague de frottement (14) à l'extrémité libre des languettes élastiques (18).

9. Unité de montage selon les revendications 5 à 8, caractérisée en ce que les parties courbes (20) comportent une section arrondie.

10. Unité de montage selon les revendications 5 à 9, caractérisée en ce que le côté radial (17) ou les languettes élastiques (18) formées à partir de ce dernier, sont conformés pour épouser le contour de la bague d'étanchéité élastique (15).

11. Unité de montage selon les revendications 5 à 10, caractérisée par un disque élastique (16) de forme approximativement sinueuse, s'étendant axialement entre la bague frottante (14) et le côté radial (17) ou les languettes élastiques (18).

12. Unité de montage selon les revendications 5 à 11, caractérisée en ce que le carter (9) du joint à bague frottante (6) est fait d'acier de ressort.

13. Unité de montage selon les revendications 5 à 12, caractérisée en ce que les languettes élastiques (18) dans l'état non monté de l'unité de montage (1) sont adjacentes au côté radial courbe (8) d'un moyeu (3) lié avec la roue mobile (2), ledit moyeu (3) servant de corps de liaison (7, 26) entre le joint à bague frottante (6) et la roue mobile (2).

FIG. 1

FIG. 2

FIG. 3

FIG. 4